# EUROPÄISCHE PATENTSCHRIFT

(11) **EP 1 915 230 B1**
(45) Veröffentlichungstag und Bekanntmachung des Hinweises auf die Patenterteilung: **11.02.2015**
(21) Anmeldenummer: 06778063.5
(22) Anmeldetag: 28.07.2006
(51) Int. Cl.: B23K 3/047, H01L 21/67

(54) **THERMODENVORRICHTUNG FÜR EINE VIELZAHL VON HALBLEITERBAUELEMENTEN**
THERMODE DEVICE FOR A MULTITUDE OF SEMICONDUCTOR COMPONENTS
DISPOSITIF THERMODE POUR UNE PLURALITE DE DISPOSITIFS A SEMI-CONDUCTEUR

(30) Priorität: 12.08.2005 DE 102005038416
(43) Veröffentlichungstag der Anmeldung: 30.04.2008
(73) Patentinhaber: Mühlbauer GmbH & Co. KG, 93426 Roding (DE)
(72) Erfinder: WECKERLE, Ewald, 93173 Wenzenbach (DE); WODARZ, Alexander, 81547 München (DE); BIERL, Stefan, 93449 Waldmünchen (DE); SIGMUND, Niklas, 93199 Zell (DE)
(74) Vertreter: Schmidt, Steffen
(86) Internationale Anmeldenummer: PCT/EP2006/064805
(87) Internationale Veröffentlichungsnummer: WO 2007/020174

(56) Entgegenhaltungen:
- EP-A- 0 539 851
- DE-A- 10 251 896
- US-A- 4 871 899

## Beschreibung

Die Erfindung betrifft eine Thermodenvorrichtung zum Verbinden und/oder elektrischen Kontaktieren einer Vielzahl an ersten Halbleiterbauelementen mit mindestens einem Trägerelement und/oder einer Vielzahl an zweiten Halbleiterbauelementen mittels Erwärmung eines Klebstoffes unter Druckbeaufschlagung gemäss dem Oberbegriff des Patentanspruches 1.

DE 102 51 896 A1 zeigt eine Verbindungsvorrichtung mit einer oberen und einer unteren Thermode. Die baugleichen Thermoden weisen ein Temperaturvariationselement auf. Dieses besteht aus einem Trägersubstrat und besitzt auf einer dem Werkstück abgewandten Seite aufgeprägte Widerstandsbahnen. Gemäß einer Ausführungsform sind zwei Thermoden spaltfrei nebeneinander angeordnet. Die Temperatur auf der Oberfiläche beider Thermoden ist im Wesentlichen gleich. Auch der Temperaturverlauf ist im Wesentlichen identisch.

Zur Herstellung von mikroelektronischen Baugruppen werden Halbleiterbauelemente, wie beispielsweise Silizium-Chips, die auch als Flip-Chips aufgebracht werden können, auf Trägersubstrate, die eine Antenne aufweisen können, oder auf weitere Halbleiterbauelemente, die wiederum Silizium-Chips sein können, montiert. Für eine derartige Montage der Halbleiterbauelemente werden häufig Kontaktklebstoffe verwendet, um neben der Fixierung des Halbleiterbauelements zugleich einen elektrischen Kontakt zwischen Anschlussstellen des Chips und des Trägersubstrates bzw. eines weiteren Chips herzustellen. Die hierfür verwendeten Kontaktklebstoffe oder Lote werden in der Regel mittels Thermodeneinheiten bei erhöhter Temperatur unter Druckbeaufschlagung ausgehärtet.

### Stand der Technik

Herkömmlicherweise weisen hierfür verwendete Thermodenvorrichtungen, wie es beispielsweise aus US 4,736,882 bekannt ist, einen unterseitigen Heizkörper auf, der entlang der Vertikalen nach unten und nach oben verschoben werden kann, um die zu verbindenden Bauteile und die dazwischen angeordneten Klebstoffe während eines Wärmeübertragungsvorganges mit Druck zu beaufschlagen oder freizugeben. Derartige eine einzelne Thermode aufweisende Thermodenvorrichtungen sind häufig auf einem Druckstempel angeordnet. Die

Thermoden müssen dann einzeln mit individuellen Druck- und Temperaturgrößen beaufschlagt werden. Eine derartige auf eine Einzelthermode ausgerichtete Ansteuerung erfordert einen aufwendigen Aufbau, der kostenintensiv in seiner Herstellung ist, sofern eine Vielzahl derartiger Thermoden in einer gemeinsamen Verbindungseinrichtung angeordnet sind.

Derartige zu einer Verbindungseinrichtung zusammengefasste Einzelthermodenvorrichtungen können nebeneinander mit einem Minimumabstand zueinander angeordnet werden, welcher durch die Abmaße von Führungselementen, welche die Einzelthermoden bzw. die Heizelemente, die darin verschiebbar angeordnet sind, aufnehmen, festgelegt ist. Da derartige Einzelthermodenvorrichtungen jeweils eine eigene Heizeinrichtung aufweisen, sind die Außenabmessungen einer derartigen Einzelthermodenvorrichtung derartig groß, dass sich eine Nebeneinanderanordnung dieser Einzelthermodenvorrichtungen mit paralleler Ausrichtung bei einem Abstand von beispielsweise weniger als 10 mm nicht realisieren lässt.

Als Alternative sind Thermodenvorrichturigen bekannt, die sich dadurch auszeichnen, dass an der Unterseite einer gemeinsamen Platte eine Vielzahl an Thermoden angeordnet sind, wobei derartige Thermoden nicht individuell in ihrem Druck einstellbar sind. Hierdurch ergibt sich zwingend die Notwendigkeit, dass die Platte auf beispielsweise ein Trägersubstrat mit einer Vielzahl von Halbleiterbauelementen, die mit dem Trägersubstrat verbunden werden sollen, ohne Verkantung oder Neigung aufgesetzt wird, um die Zerstörung derjenigen Halbleiterbauelemente, die bei einer geneigten Platte zuerst durch eine Thermode kontaktiert werden, zu vermeiden.

Grundsätzlich ist mit zunehmender Miniaturisierung der zu montierenden Halbleiterbauelemente während der durch einen Grundkörper durchgeführten Druckbeaufschlagung eine zunehmende Gefahr der Zerstörung derartig kleiner Halbleiterbauelemente gegeben. Dies führt zu Funktionsstörungen der montierten Halbleiterbauelemente.

Demzufolge liegt der vorliegenden Erfindung die Aufgabe zugrunde, eine Thermodenvorrichtung für das Verbinden und/oder das elektrische Kontaktieren einer Vielzahl von Halbleiterbauelementen mit mindestens einem Trägerelement und/oder einer Vielzahl weiterer Halbleiterbauelemente zur Verfügung zu stellen, welche das gleichzeitige Aushärten von verwendeten Klebstoffteilen bei mehreren Halbleiterbauelementen selbst dann ermöglicht, wenn diese einen geringen Abstand zueinander aufweisen.

Diese Aufgabe wird gemäß den Merkmalen des Patentanspruches 1 gelöst.

Kerngedanke der Erfindung ist es, eine Thermodenvorrichtung zum Verbinden und/oder elektrischen Kontaktieren einer Vielzahl an ersten Halbleiterbauelementen mit mindestens einem Trägerelement und/oder einer Vielzahl von zweiten Halbleiterbauelementen mittels Erwärmung eines Klebstoffes unter Druckbeaufschlagung derart auszubilden, dass ein Grundkörper unterseitig eine Mehrzahl von vertikal ausgerichteten und nebeneinander angeordneten Heizplatten aufweist, wobei jede Heizplatte an ihrer Stirn- und Unterseite eine Mehrzahl an herausfahrbaren Heizelementen aufweist, wovon jedes unterseitig jeweils einem ersten Halbleiterbauelement zugeordnet ist. Auf diese Weise ist die gleichzeitige Druckbeaufschlagung mehrerer eng nebeneinander angeordneter erster Halbleiterbauelemente möglich, ohne das dies mit einer ungleichen Erwärmung einzelner Klebstoffe und einer ungleichen Druckbeaufschlagung einzelner erster Halbleiterbauelemente.einhergeht. Vielmehr wird aufgrund der Anordnung mehrerer Heizplatten eine gleichmäßige Erwärmung einzelner aus jeweils diesen Heizplatten herausragenden Heizelemente, die als zylinderförmige Stifte ausgebildet sein können, sichergestellt.

Wenn diese zylinderförmigen Stifte innerhalb komplementär ausgebildeter zylinderförmiger Kanäle innerhalb des Grundkörpers auf- und abfahrbar derart angeordnet sind, dass sie rückseitig, also an ihrer Oberseite, mittels eines Federelements mit einer Federkraft beaufschlagt sind und diese Federkraft mittels eines Stellelements, wie einer Stellschraube, einstellbar ist, können individuelle Federkräfte für verschiedene erste Halbleiterbauelemente eingestellt werden. Auf diese Weise kann in Abhängigkeit von der Verwendung verschiedener Klebstoffe oder unterschiedlich hoher Halbleiterbauelemente die Federkraft individuell auf einfache Weise eingestellt werden, selbst dann, wenn die ersten Halbleiterbauelemente einen Abstand von weniger als 10 mm, oder sogar weniger als 4 mm aufweisen.

Alternativ zu der Verwendung eines Federelements kann auch ein Luftpolster angeordnet werden, um dämpfend auf die Verschiebebewegungen der zylinderförmigen Stifte zu wirken.

Durch eine derartige Anordnung der zylinderförmigen Stifte können Höhenunterschiede zwischen dem Trägersubstrat und den ersten Halbleiterbauelementen ausgeglichen werden.

Dies ist insbesondere dann relevant, wenn eine Vielzahl von ersten Halbleiterbauelementen nebeneinander auf einem gemeinsamen Trägersubstrat angeordnet ist.

Innerhalb einer jeden Heizplatte ist mindestens ein Heizdraht, vorzugsweise schlangenförmig, zum Erhitzen der Heizplatte mittels elektrischer Energie angeordnet. Dies führt zu einer gleichmäßigen Erwärmung einer jeden Heizplatte und somit zu einer gleichmäßigen Erwärmung sämtlicher in dieser Heizplatte angeordneten zylinderförmigen Stifte, welche die Wärme auf die darunterliegenden ersten Halbleiterbauelemente und die unter den ersten Halbleiterbauelementen angeordneten Klebstoffteile weitergeben.

Die gleichmäßige Erwärmung einer jeden Heizplatte wird vorzugsweise durch einen drahtförmigen Temperaturfühler, der ebenso innerhalb dieser Heizplatten angeordnet ist, kontrolliert und mittels einer Steuereinheit gesteuert und mittels einer Regeleinheit geregelt.

Weitere vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:
- Fig. 1: in einer perspektivischen Darstellung von schräg unten eine Thermodenvorrichtung gemäß einer Ausführungsform der Erfindung;
- Fig. 2: in einer perspektivischen Querschnittsdarstellung entlang der Breitenseite die in Fig. 1 gezeigte Thermodenvorrichtung;
- Fig. 3: in einer perspektivischen Querschnittsdarstellung entlang der Längsseite der in Fig. 1 dargestellten Thermodenvorrichtung die Thermodenvorrichtung gemäß der Ausführungsform der Erfindung;
- Fig. 4: in einer perspektivischen Querschnittsdarstellung entlang der Längsseite der in Fig. 1 gezeigten Thermodenvorrichtung die Thermodenvorrichtung mit integrierten Heizdrähten und
- Fig. 5: in einer perspektivischen Explosionsdarstellung die Thermodenvorrichtung gemäß der Ausführungsform der Erfindung.

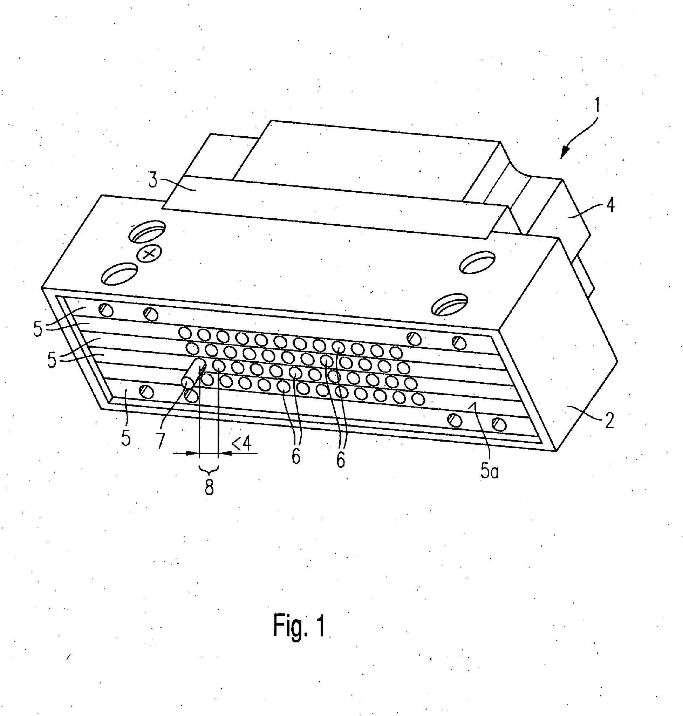

In Fig. 1 wird in einer perspektivischen Darstellung von schräg unten eine Thermodenvorrichtung gemäß einer Ausführungsform der Erfindung gezeigt. Die Thermodenvorrichtung 1 umfasst einen Grundkörper, welcher sich aus den drei Grundkörperteilen 2, 3 und 4 zusammensetzt.

In dem Grundkörperteil 2 sind mehrere Heizplatten 5 mit vertikaler Ausrichtung derart nebeneinander angeordnet, dass deren größte Oberflächen bzw. ihre Grundflächen aneihanderliegen.

Die Heizplatten 5 weisen eine Stirn- und Unterseite 5a auf, an welcher eine Vielzahl von Öffnungen 6 angeordnet sind, welche die Öffnungen von zylinderförmigen, parallel zueinander angeordneten Kanälen darstellen.

In jeder oder auch in nur ausgewählten zylinderförmigen Kanälen ist jeweils ein zylinderförmiger Stift 7 verschiebbar angeordnet. Der zylinderförmige Stift 7 kann unterseitig aus der Stirn- und Unterseite 5a der Heizplatten 5 herausgefahren werden.

Ein Abstand zwischen den zylinderförmigen Stiften 7 und damit der zylinderförmigen Kanäle liegt vorzugsweise in einem Größenbereich von weniger als 4 mm, welcher dem Abstand von hier nicht näher dargestellten ersten Halbleiterbauelementen entspricht, die mit einem Trägerelement oder zweiten Halbleiterbauelementen verbunden werden sollen.

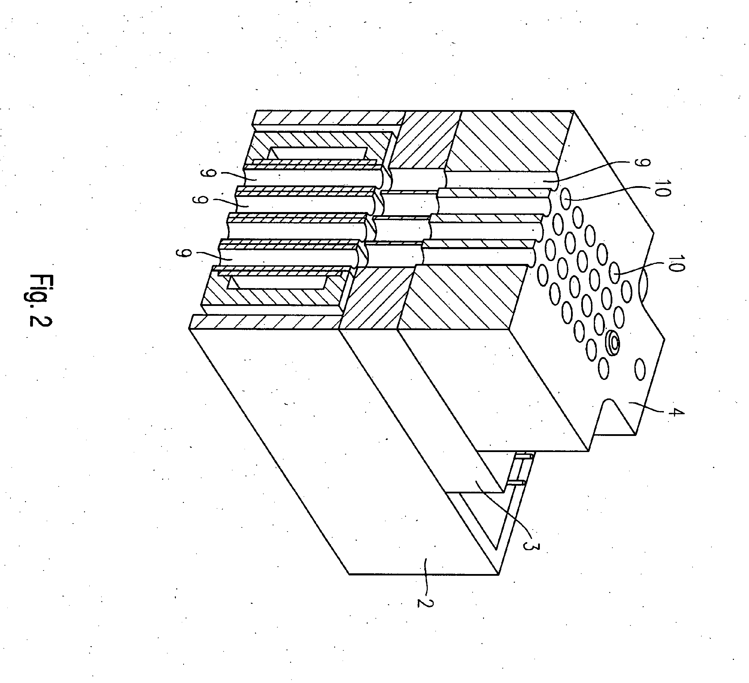

In Fig. 2 wird in einer perspektivischen Schnittdarstellung entlang der Breitenrichtung die Thermodenvorrichtung gemäß Fig. 1 gezeigt. Gleiche und gleichbedeutende Bauteile sind mit gleichen Bezugszeichen versehen.

Der in Fig. 2 dargestellten Schnittdarstellung ist deutlich zu entnehmen, dass der Grundkörper mit seinen Grundkörperteilen 2, 3 und 4 von unten nach oben komplett durchlaufende zylinderförmige Kanäle 9 aufweist, die oberseitig mit Öffnungen 10 enden.

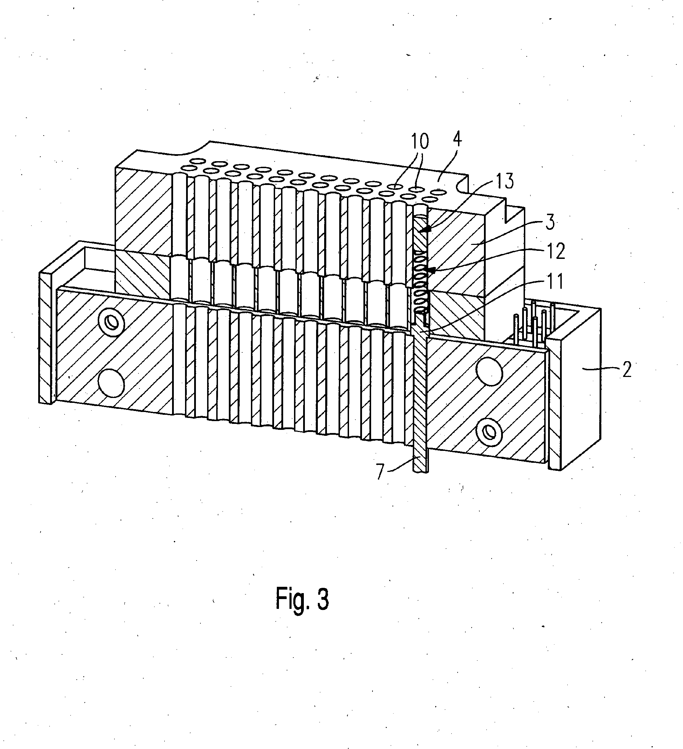

In Fig. 3 kann in einer perspektivischen Schnittdarstellung entlang der Längsseite der Thermodenvorrichtung 1 die Anordnung des zylinderförmigen Stiftes 7 innerhalb des zylinderförmigen Kanals 9 gesehen werden. Oberhalb des zylinderförmigen Stiftes 7 ist eine Feder 12 angeordnet, die über eine Stellschraube 13 mit einer Vorspannkraft beaufschlagt wird. Die Feder dient dem Kraftausgleich während eines Nachuntenfahrens des Grundkörpers 2, 3, 4 zur Druckbeaufschlagung einzelner erster Halbleiterbauelemente während des Klebstofferwärmungsvorganges. Ein derartiger Kraftausgleich dient dazu, einzelne Chips oder Flip-Chips nicht durch eine zu hohe Kraftbeaufschlagung zu zerstören.

Aufgrund eines derartig ausgebildeten Thermodenfeldes mit einer Vielzahl der zylinderförmigen Stifte, die die einzelnen Thermoden darstellen, können viele Flip-Chips bzw. Chips gleichzeitig unter Druckbeaufschlagung erwärmt werden, wobei jede einzelne Thermode bzw. Thermodehnadel 7 durch die sich in dem einen Block darstellenden Grundkörper 2, 3, 4 befindliche Feder 12 regulieren lässt. Dies ermöglicht selbst bei geringen Beabstandungen der einzelnen Halbleiterchips zueinander eine zuverlässige Befestigung derjenigen auf einem Trägersubstrat durch Erwärmung der Thermodennadeln. Folglich ist mit einem derartig ausgebildeten Final-Bonder ein höherer Durchsatz innerhalb einer Vorrichtung, die beispielsweise Smart-Labels herstellt, bei welchen die Chips mit Antennen verbunden werden, möglich.

Die Thermodennadel bzw. der zylinderförmige Stift 7 weist oberseitig ein breiteres Kopfende 11 auf, welches sicherstellt, dass der Stift 7 nicht nach unten durch den Kanal 9 hindurchfällt.

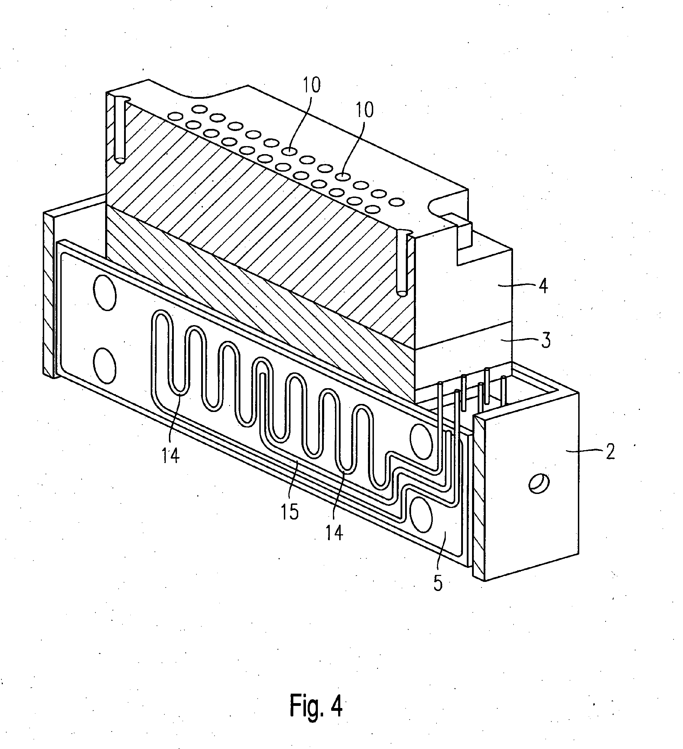

In Fig. 4 wird in einer perspektivischen Schnittdarstellung entlang der Längsseite der Thermodenvorrichtung 1 ein weiterer Querschnitt der Heizplatte 5 in einem Bereich, in dem Heizdrähte 14 mit drahtförmigen Temperaturfühlern 15 angeordnet sind, dargestellt. Die Heizdrähte 14 sind vorzugsweise schlangenförmig angeordnet, um eine gleichmäßige Erwärmung der Heizplatte 5 und somit eine gleichmäßige Erwärmung sämtlicher Stifte 7 sicherzustellen. Dies wird mittels dem Temperaturfühler 15 kontrolliert und gegebenenfalls über ein Ausgangssignal an eine hier nicht näher dargestellte Steuereinheit mittels einem Rückkopplungsvorganges an die Heizdrähte 14 als neu zu regelnden Temperaturvorgang weitergegeben.

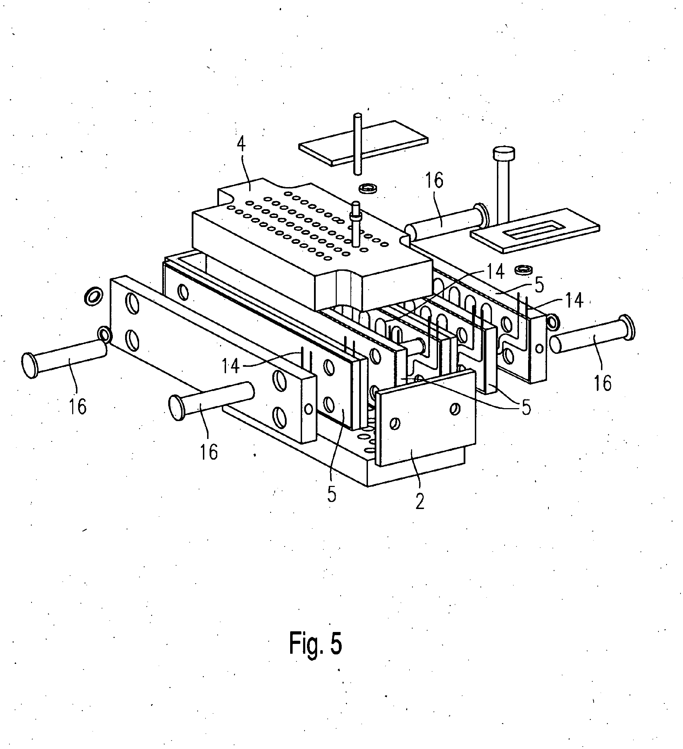

In Fig. 5 werden in einer perspektivischen Explosionsdarstellung die Einzelteile der erfindungsgemäßen Thermodenvorrichtung wiedergegeben. Dieser Darstellung ist deutlich zu entnehmen, dass die Teile mittels Stifte 16 oder Schrauben, die durch Öffnungen der Teile hindurchgesteckt werden, zusammengehalten werden.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Thermodenvorrichtung
- 2, 3, 4: Grundkörperteile
- 5: Heizplatten
- 5a: Stirn- und Unterseiten der Heizplatten
- 6: untere Öffnungen
- 7: zylinderförmiger Stift
- 8: Abstand
- 9: zylinderförmige Kanäle
- 10: obere Öffnungen
- 11: breites Kopfende
- 12: Federelement
- 13: Stellschraube
- 14: Heizdrähte
- 15: Temperaturfühler
- 16: Stifte, Schrauben

## Patentansprüche

1. Thermodenvorrichtung zum Verbinden und/oder elektrischen Kontaktieren einer Vielzahl an ersten Halbleiterbauelementen mit mindestens einem Trägerelement und/oder einer Vielzahl an zweiten Halbleiterbauelementen mittels Erwärmung eines Klebstoffes unter Druckbeaufschlagung, wobei die Thermodenvorrichtung (1) einen Grundkörper (2, 3, 4) und ein aus dem Grundköper (2, 3, 4) herausfahrbares Heizelement (7), welches druckbeaufschlagt auf mindestens eines der ersten Halbleiterbauelemente wirkt, umfasst,
**dadurch gekennzeichnet, dass**
der Grundkörper (2, 3, 4) unterseitig eine Mehrzahl von vertikal ausgerichteten und nebeneinander angeordneten Heizplatten (5) aufweist, wobei jede Heizplatte (5) an ihrer Stirn- und Unterseite (5a) eine Mehrzahl der herausfahrbaren Heizelemente (7) aufweist, wovon jedes unterseitig jeweils einem ersten Halbleiterbauelement zugeordnet ist.

2. Thermodenvorrichtung nach Anspruch 1,
**dadurch gekennzeichnet, dass**
jedes Heizelement einen zylinderförmigen Stift (7), der innerhalb der Heizplatte (5) auf- und abwärts verschiebbar ist, darstellt.

3. Thermodenvorrichtung nach einem der vorangegangenen Ansprüche,
**dadurch gekennzeichnet, dass**
ein Abstand (8) zwischen den Heizelementen (7), die parallel zueinander angeordnet sind, weniger als 10 mm, vorzugsweise weniger als 4 mm beträgt.

4. Thermodenvorrichtung nach Anspruch 2 oder 3,
**dadurch gekennzeichnet, dass**
jeder zylinderförmige Stift (7) innerhalb eines komplementär ausgebildeten zylinderförmigen Kanals (9) verschiebbar angeordnet ist.

5. Thermodenvorrichtung nach Anspruch 4,
**dadurch gekennzeichnet, dass**
oberhalb des zylinderförmigen Stiftes (7) ein Federelement (12) und ein darüber angeordnetes Stellelement zum individuellen Einstellen einer Federkraft des Federelements (12) angeordnet sind.

6. Thermodenvorrichtung nach Anspruch 4,
**dadurch gekennzeichnet, dass**
oberhalb des zylinderförmigen Stiftes (7) ein pneumatisches Druckluftpolster angeordnet ist.

7. Thermodenvorrichtung nach Anspruch 6,
**dadurch gekennzeichnet, dass**
eine Druckregelung als Stellelement zum individuellen Einstellen einer durch das Druckluftpolster verursachten federnden Wirkung vorhanden ist.

8. Thermodenvorrichtung nach Anspruch 5,
**dadurch gekennzeichnet, dass**
das Stellelement als Stellschraube (13) ausgebildet ist.

9. Thermodenvorrichtung nach einem der vorangegangenen Ansprüche,
**dadurch gekennzeichnet, dass**
jede Heizplatte (5) mindestens einen Heizdraht (14) zum Erhitzen der Heizplatte (5) beinhaltet.

10. Thermodenvorrichtung nach einem der vorangegangenen Ansprüche,
**dadurch gekennzeichnet, dass**
jede Heizplatte (5) einen drahtförmigen Temperaturfühler (15) beinhaltet.

## Claims

1. Thermode device for connecting and/or electrically connecting a plurality of first semiconductor components to a least one support element and/or to a plurality of second semiconductor components by heating an adhesive under the application of pressure, the thermode device (1) comprising a basic body (2, 3, 4) and a heating element (7) which is extendable out of the basic body (2, 3, 4) and which, under the application of pressure, acts on at least one of the first semiconductor components,
**characterized in that**
the basic body comprises on its underside a plurality of heating plates (5) which are oriented vertically and are arranged next to one another, wherein each heating plate (5) has on its end and underside a plurality of extendable heating elements, to the underside of each of which there is assigned a first semiconductor component.

2. The thermode device according to claim 1
**characterized in that**
each heating element is a cylindrical pin (7) which can be displaced up and down inside the heating plate.

3. The thermode device according to any one of the preceding claims
**characterized in that**
a distance (8) between the heating elements (7), which are arranged parallel to one another, is less than 10 mm, preferably less than 4 mm.

4. The thermode device according to claim 2 or claim 3
**characterized in that**
each cylindrical pin (7) is displaceable inside a cylindrical channel (9) of complementary shape.

5. The thermode device according to claim 4
**characterized in that**
above the cylindrical pin (7) a spring element (12) and an adjusting element, which is arranged above the cylindrical pin, for individually adjusting a spring force of the spring element (12) are arranged.

6. The thermode device according to claim 4
**characterized in that**
above the cylindrical pin (7) a pneumatic compressed air cushion is arranged.

7. The thermode device according to claim 6
**characterized in that**
a pressure control in the form of an adjusting element for individually adjusting a spring effect brought about by the compressed air cushion is present

8. The thermode device according to claim 5
**characterized in that**
the adjusting element is shaped as an adjusting screw (13).

9. The thermode device according to any one of the preceding claims
**characterized in that**
each heating plate (5) comprises at least one heating wire (14) for heating the heating plate (5).

10. The thermode device according to any one of the preceding claims
**characterized in that**
each heating plate (5) comprises a wire-type temperature sensor (15).

## Revendications

1. Dispositif thermode servant à établir une connexion et/ou un contact électrique entre une pluralité de premiers composants à semi-conducteur et au moins un élément de support et/ou une pluralité de seconds composants à semi-conducteur par thermocollage et par application d'une pression, ce dispositif thermode (1) comportant un corps de base (2, 3, 4) et un élément chauffant (7) qui peut être déplacé en dehors du corps de base (2, 3, 4) et qui agit sous l'effet d'une pression sur au moins un des premiers composants à semi-conducteur,
**caractérisé en ce que**
le corps de base (2, 3, 4) présente côté inférieur une pluralité de plaques chauffantes (5) orientées verticalement et disposées les unes à côté des autres, chaque plaque chauffante (5) présentant sur sa face terminale inférieure (5a) une pluralité desdits éléments chauffants (7) dont chacun est côté inférieur respectivement attribué à un premier composant à semi-conducteur.

2. Dispositif thermode selon la revendication 1,
**caractérisé en ce que** chaque élément chauffant est constitué par une tige cylindrique (7) pouvant coulisser vers le haut et vers le bas à l'intérieur de la plaque chauffante (5).

3. Dispositif thermode selon l'une des revendications précédentes,
**caractérisé en ce que** l'écart (8) entre les éléments chauffants (7) disposés parallèlement les uns par rapport aux autres est inférieur à 10 mm, préférentiellement inférieur à 4 mm.

4. Dispositif thermode selon l'une des revendications précédentes,
**caractérisé en ce que** chaque tige cylindrique (7) est disposée de manière à pouvoir coulisser à l'intérieur d'un canal (9) cylindrique formé de façon complémentaire.

5. Dispositif thermode selon l'une des revendications précédentes,
**caractérisé en ce qu'**un élément formant ressort (12) et un élément servant au réglage individuel de la force exercée par l'élément formant ressort (12) placé au-dessus de ce dernier sont disposés au-dessus de la tige (7) cylindrique.

6. Dispositif thermode
**caractérisé en ce que** la tige (7) cylindrique est surmontée d'un coussin d'air comprimé.

7. Dispositif thermode selon la revendication 6,
**caractérisé en ce que** l'élément de réglage servant au réglage individuel de l'effet amortisseur du coussin d'air comprimé se présente sous la forme d'une régulation de pression.

8. Dispositif thermode selon la revendication 7,
**caractérisée en ce que** l'élément de réglage se présente sous la forme d'une vis de réglage.

9. Dispositif thermode selon l'une des revendications précédentes,
**caractérisé en ce que** chaque plaque chauffante (5) comporte au moins un fil chauffant (14) pour chauffer la plaque chauffante (5).

10. Dispositif thermode selon l'une des revendications précédentes,
**caractérisé en ce que** chaque plaque chauffante (5) comporte une sonde de température (15) en forme de fil.
